# EUROPEAN PATENT SPECIFICATION

(11) **EP 3 126 217 B1**
(45) Date of publication and mention of the grant of the patent: **18.12.2019**
(21) Application number: 15773561.4
(22) Date of filing: 31.03.2015
(51) Int. Cl.: B63C 9/01, B64D 1/02, B65D 17/00, A62B 99/00

(54) **AERIAL DEPLOYABLE RESCUE PACKAGE**
IN DER LUFT ENTFALTBARES RETTUNGSPAKET
MODULE DE SAUVETAGE DÉPLOYABLE AÉRIEN

(30) Priority: 31.03.2014 AU 2014901163
(43) Date of publication of application: 08.02.2017
(73) Proprietor: The Commonwealth of Australia, Edinburgh SA 5111 (AU)
(72) Inventor: COLES, David, Kenneth, Edinburgh, South Australia 5111 (AU)
(74) Representative: Gill Jennings & Every LLP
(86) International application number: PCT/AU2015/000184
(87) International publication number: WO 2015/149108

(56) References cited:
- GB-A- 620 731
- GB-A- 620 731
- US-A- 4 639 229
- US-A- 5 232 184
- US-A1- 2003 197 095
- US-A1- 2004 000 618
- US-A1- 2004 051 006

## Description

### TECHNICAL FIELD

The field is multi-purpose multi-form rescue packages used in search and rescue missions.

### PRIORITY

This application claims priority from Australian Provisional Patent Application Number 2014901163. The contents of this application are hereby incorporated by reference in their entirety.

### BACKGROUND

Rescue packages are used by many agencies for distribution in emergency situations to provide temporary relief to people in distress. Those people are typically in remote areas or areas adversely affected by natural and man-made disasters. Some packages are specifically developed for distribution by aircraft from the air as they fly over those areas. Others are delivered from helicopters and yet others from sea going vessels and in some cases delivered from more than one of these transport and rescue options. There are many names and descriptions for these rescue packages; some include air-deliverable search and rescue kits, assistance packages, search and survivor assistance kits, survival kit air droppable, survival kits, etc.

The packages include a variety of items, such as inflatable life rafts for water based rescues, multi-purpose (sea and land) survival stores that include: potable water, long-life food, matches, light sources, beacons, communication devices, batteries, rope, water proof sheet material, blankets, sunscreen, hats, insect repellent, containers, utensils, sea-sickness tablets, water bailer, sponges, etc. The make-up of the kits will vary for the type of rescue or assistance involved, although reasonable estimates are made so that such kits can be prepared well before they are needed and used for an anticipated range of situations.

These kits are delivered in a variety of ways. Much depends on their size, weight and configuration. The kits include life rafts, survival / emergency equipment and supplies, emergency radios, food, potable and sterilized water and medical supplies. Some are large and need to be dropped from cargo ramps or out of large aircraft doorways. Others are smaller and less sophisticated and are dropped to survivors at slow speeds out of the doors of the aircraft, including from helicopters. These kits vary in price from US$100,000 down to less than US$100.

One example of a current air deliverable search and survivor assistance kit used by the AP-3C Orion aircraft is the Air-deployable Search and Rescue Kits (ASRK). Two ASRKs can be loaded in the bomb bay and launched safely and remotely by the aircrew. Each kit contains two inflatable 10 man (Switlik SAR8) life rafts and two of Marine Stores Containers (MSC). Another kit the AP-3C Orion aircraft can deliver is a Heli-Box stores kit (which gets its name from the typical delivery aircraft being a Helicopter) containing, in one example, supplementary medical supplies, but this kit needs to be ejected from an open door of the alternative transport being a AP-3C Orion aircraft during flight. Other aircraft have the same issues.

There are a number of considerations, each ASRK costs between USD 50,000 and USD 100,000, but once delivered there is little else the aircraft can do for a spread out survivor field. There is no capacity for providing more and different kits, which would suit one and two persons in distress or that are in need of assistance, especially those persons located away from the larger groups that will be assisted by the delivered ASRKs. Furthermore the ASRK cannot be delivered by many other aircraft, even the Boeing P-8 Poseidon currently has no ASKR capability and the door of that aircraft cannot be opened during flight to deliver Heli-Boxes. Yet further there are a number of restrictions to the way in which such rescue packages can be launched and the types of aircraft that can be use to launch such packages.

There is a need for a rescue package that is less costly but can be delivered by a large number of aircraft, particularly of the search and rescue type, like the P-3 Orion, the P8-A and P-8I, or other moving launch platforms, including ships, wherein the latter aircraft cannot at this time accommodate an ASRK and deal with Heli-Boxes at all or with difficulty.

GB 620,731 A discloses an arrangement that keeps the shock effect, due to the initial retardation on a load dropped by parachute apparatus from a aircraft travelling at high speed or altitude, in safe limits.

### BRIEF DESCRIPTION

In a broad aspect of a rescue package arrangement for launching from a moving platform having a launch tube, includes a container body externally sized and shaped to be launched from a moving platform using a launch tube; a main parachute located within the container; a drogue chute within the container deployed after deployment of the container from the moving platform the drogue chute and connected to the main parachute by a drogue tether; a decelerator chute connected to the container and located within the container and arranged to deploy with or after the drogue chute is deployed; and a delay mechanism arranged to delay deployment of the main parachute for a period of time after the drogue chute deployed from the container; wherein the container is adapted to contain a payload including at least one of the group of items: inflatable life raft, potable water, long-life food, matches, handheld light sources, handheld beacons, handheld communication devices, cell batteries, rope, water proof sheet material, blankets, sunscreen, hats, insect repellent, containers, utensils, sea-sickness tablets, water bailer, sponges, and
wherein the decelerator chute assists the stabilisation of the container during at least a portion of the flight of the container.

In an aspect of a rescue package, the delay mechanism comprises a winding of the drogue tether located within the container adapted to play out as the drogue chute and the container separate in distance and the delay period being determined by the length of the drogue tether, the end of which is attached to a main parachute.

In yet a further aspect a drogue deployment mechanism having an air resistance element located external to the container connected to the drogue chute initiates the deployment of the drogue chute once the container is launched from the launch tube
and also begins the delay mechanism.

In another aspect of the rescue package a bulkhead partition is located between the main parachute and the payload, the bulkhead partition adapted to release the payload from containment in the container when the main parachute is spaced from the bulkhead by a length of main parachute tether.

In another form, there is a line connection between the main parachute and at least one item of the group of items, and the container.

In yet another aspect of the rescue package the order of connection is main parachute, the container and at least one item.

In another aspect of the rescue package the minimum weight of the rescue package is 7 kilograms.

In an aspect of the rescue package the maximum weight of the rescue package is 17.7 kilograms.

In yet another aspect of the rescue package the container is one of sizes A, B, C, D, E, F, or G of the military standard containers being suitable for launch from a chute sized to accommodate packages of a diameter equal to or less than 12.5 centimetres.

In an aspect, there is a secondary container sized to fit within the container wherein the secondary container is adapted to contain at least one of the group of items while the container contains the secondary container.

Throughout this specification and the provisional claims that follow unless the context requires otherwise, the words 'comprise' and 'include' and variations such as 'comprising' and 'including' will be understood to imply the inclusion of a stated integer or group of integers but not the exclusion of any other integer or group of integers.

The reference to any background or prior art in this specification is not, and should not be taken as, an acknowledgment or any form of suggestion that such background or prior art forms part of the common general knowledge.

Specific embodiments will now be described in some further detail with reference to and as illustrated in the accompanying figures. These embodiments are illustrative, and not meant to be restrictive of the scope of the appended claims. Suggestions and descriptions of other embodiments may be included within the scope of the appended claims but they may not be illustrated in the accompanying figures or alternatively features may be shown in the figures but not described in the specification. It will be appreciated that the invention is not limited to the embodiment or embodiments disclosed, but is capable of numerous rearrangements, modifications and substitutions without departing from the scope of the invention as set forth and defined by the following claims.

### BRIEF DESCRIPTION OF THE FIGURES

Figure 1 depicts an embodiment showing the mode of storage of two single person life rafts and their deployment after being launched from an aircraft;
Figure 2 depicts an embodiment showing the mode of storage of a single person life raft and survival supplies and their deployment after being launched from an aircraft;
Figure 3 depicts an embodiment showing the mode of storage of a life raft and survival supplies in the same container and their deployment after being launched from an aircraft;
Figure 4 depicts an embodiment showing a multi-use container to be filled during the emergency with supplies or equipment suitable for launching from an aircraft to those in need;
Figure 5a depicts an embodiment of the air vane arrangement which is in this embodiment a drogue chute deployment mechanism;
Figure 5b is a top view of the air vane cap fitted to the top of the container;
Figure 6 depicts the air vane extracting both the drogue chute and the decelerator chute using a deployment bag;
Figure 7 depicts the air vane extracting both the drogue chute and the decelerator chute with the deployment bag almost removed from the chutes;
Figure 8 depicts the deceleration chute is fully deployed and the tethered drogue chute is separating and filling;
Figure 9A depicts the drogue chute moving further away from the container further extracting a drogue chute tether;
Figure 9B depicts the still attached deceleration chute and the drogue chute drags on full length of the drogue chute tether;
Figure 10 depicts the still attached deceleration chute and just out of the image the drogue chute drags on full length of the drogue chute tether to continue the deployment of the main parachute;
Figure 11 depicts the main parachute fully deployed and the main parachute main line initiating the release of payload from the container;
Figure 12 depicts the physical separation of the but still connected by a line and still connected by a lanyard to the base plate and support strap assembly;
Figure 13 depicts the substantially vertical orientation of the items hanging off the main parachute as the parachute descends towards the target zone;
Figure 14 depicts a section of a top cap assembly showing lock pins extended so as to retain the top cap in the container;
Figure 15 depicts an isometric top view of the top cap showing the tethered drogue chute lug in retracted position relative to the inner base of the top cap and one of the lock pins in an extended position;
Figure 16 depicts a sectional view of the top cap showing how the force applied by the drogue chute to the end of the drogue chute tether attached to the drogue chute lug moves the linkages from an over-centre position to an out of over-centre position;
Figure 17 depicts an isometric view of the top cap;
Figure 18 depicts a coiled drogue chute tether in a spool casing designed to effectively allow the drogue chute tether to freely spool out as the drogue chute becomes further separated from the container;
Figure 19 is a sectional view of the spool casing containing the spooled drogue chute tether;
Figure 20 depicts a top isometric view of the top cap showing the drogue chute lug connected to an end of the drogue chute tether;
Figure 21 depicts the top cap tethered to the drogue chute after actuation of the drogue chute lug which has retracted the pins and allowed the top cap to exit the end of the container;
Figure 22 depicts the bulkhead partition between the main parachute and associated main tether line and the payload and is releasably locked to the support straps which together support the payload;
Figure 23 depicts a perspective view of an embodiment of a base plate and support straps supporting, in this embodiment, vacuum packed folded life rafts while in the container;
Figure 24 depicts a perspective view of the bulkhead assembly showing two shackle portions, connectable to the main line (not shown) of the main parachute;
Figure 25 depicts a cross-sectional view of an embodiment of the bulkhead assembly and the movement of the connector pins which extend through the bulkhead, acts on a lever arrangement within the bulkhead assembly and in one state the locking pins are extended into the payload support straps;
Figure 26 depicts when the lever arrangement in the bulkhead is in the other state and the locking pins are moved out of respective apertures in the payload support straps;
Figure 27 depicts when an inserted pin is raised while inserted in the side of the bulkhead the locking pins are in the inserted state;
Figure 28 depicts when the inserted pin is in the lowered position relative to the raised position then the locking pins are in the retracted state;
Figure 29 depicts the external view of the bulkhead and the relative positions of the locking pins in relation to the raised or lowered position of the manually operable pin;
Figure 30 depicts where a life raft is encased in a frangible sleeve;
Figure 31 depicts a view of the interior elements of an embodiment of a rescue package; and
Figure 32 depicts the various container sizes suitable for use with a rescue package including a class A sized container.

In the following description, like reference characters designate like or corresponding parts throughout the figures.

### DETAILED DESCRIPTION OF EMBODIMENTS

An embodiment of a rescue package is configured using as a template a known sonobuoy for the container shape, size and weight.

Sonobuoys are launched from an aircraft using free-fall, pneumatics, or a Cartridge Actuated Device (CAD) (that can achieve launch acceleration of up to 500G) from a launch tube designed to accommodate the various container lengths which are the main variable of a standard diameter container. When launched from aircraft the sonobuoy can use a decelerator (sometimes comprising a decelerator parachute (decelerator chute)) to retard their descent and provide descent stability, with the decelerator being deployed from an end of the sonobuoy container well after it has launched from the aircraft, the distance being more a function of the exit speed of the container caused by the typically active deployment type. The container can be actively launched from the aircraft at speeds of many hundreds of kilometres per hour reached less than a second after being launched from the launch tube.

Sonobuoy containers are classified by size (A, B, C, etc.). Most sonobuoys are A-size length 91 centimetres, diameter 12.5 centimetres. The A-size sonobuoy weight varies by manufacturer and buoy type, but does not exceed 17.7 kilograms or weigh less than 7 kilograms. Some sonobuoys using half size or A/2 as their standard container.

Container size for devices such as sonobuoys is a well understood standard used by the military and some search and rescue services. In particular, in a preferred embodiment of the rescue package container, the container is an "A" class sized storage container, since such containers are capable of being used in a large range of aircraft, which have as a standard fitting a standard container launch tube (sometimes also referred to as a sonobuoy launch chute (SLC) or a launch chute).

It is preferable that the container used for the rescue package be launched using any of the methods described since it will then be useable by more aircraft and other launch vehicles, even sea borne vehicles and helicopters even when a dedicated launch tube is not used or available.

In one preferred embodiment a container which is launched from a moving platform, such as an aircraft, contains a survivor assistance package or a rescue package. The content of the package can in one embodiment comprise a life raft; a small multi-purpose (sea and land) survival stores container; and a utility buoy and in another embodiment it can contain two life rafts, in yet another embodiment it can contain a collection of equipment and stores suitable for land based survival, and in yet a further embodiment it can contain a task dependant collection of equipment and stores.

The launch tube is designed to handle each of the different launch methods described above, and they all have in common the ability to launch different container sizes but those containers must all have the same outer diameter dimension of 12.5 centimetres and depending on how and what they are packed with, the largest anticipated volume for packing is the usable volume being about 11 ½ litres.

The containers that could be used are as variable in volume as is provided by the different classes A, B, C, etc. as described previously, and the numbers and types of object they can be packed with will vary with the available volume as will the number of configurations of life rafts supplies and the like. However, it is a preferred embodiment to use an A class container, which is well known and the form of the container is well catered for with respect to the storage, handling and launching from military and search and rescue aircraft and other moving platforms.

Sonobuoys devices are a specialised device used by the military and search and rescue teams, on occasions, to locate, track, and identify sources of noise within a water body. The sonobuoy is launched from the aircraft is launched from the aircraft above a body of water and once landed deploys an array of vibration sensors tuned to receive sound in the body of water. A sonobuoy can be launched from sea vessels but most usefully they can be launched from aircraft that are especially equipped to launch in a predetermined array of locations in the body of water, which when active receive and relay and sometimes analyse the signals received.

A sonobuoy is designed to be launched from the aircraft while in flight and is thus equipped with self-ejecting parachutes. The sonobuoy container has sufficient structural strength to withstand landing in the sea, having used or not used a decelerator, at which time it may also be arranged to disengage with the used parachutes, deploy a buoy/float from which depend into the water an array of sensors (typically referred to a sonar sensors), which when active sends the collected signals to the aircraft or other communication equipment.

The launching of sonobuoys can involve sequential launching of multiple sonobuoys, from an altitude of about 150 meters while the aircraft is traveling at a speed of about 180 knots and in another example from much higher altitudes of kilometres at even greater speed of about 280 knots.

Once the sonobuoy is clear of the aircraft slipstream it is stable enough to be landed at the desired location with or without deploying a parachute. In certain applications it is desirable to not use a parachute and in others it is, but, in all cases the parachutes' primary task is to reduce the speed of the container and a secondary task is to stabilise the flight characteristics of the container. At present, an algorithm performed on a computer on board the aircraft calculates the best aerial location from which to launch a sonobuoy to ensure it will land in the water at a desired target location or zone. Calculations are based on the type (size, weight and shape, etc.) of the container, wind conditions and the accuracy of determination of such characteristics along the flight profile path, aircraft altitude and speed, so as to effect a desired minimum time in flight. Typically operations are conducted at low altitudes to reduce the uncertainty of the actual target locations or zone due to wind drift and other environment conditions. Landing location uncertainty becomes a significant problem at the high operational altitudes, which can, for various reasons be many kilometers above the sea or ground level.

Adaption of a container of the same external size and shape for storage of rescue related items, preferably in one embodiment, involves an A class container being used, which has according to the relevant known standards a maximum inner length of 91.75cm and with its cylindrical form a maximum inner diameter of 12.38cm, which equates to a total volume of 11.58 litres, which is considered suitable for the loading of up to 14 kilograms of content (parachute/s and rescue related items) making the total weight of the container about 17 kilograms which is similar to a sonobuoy.

There can thus be allowance for a great variety of rescue and survival equipment to be packed within the available volume of the container.

Preferably, the container and its contents are also capable of being launched and deploying its contents in extremes of temperature, for example from -15 °C to +45 °C as well as a range of humidity conditions.

The container will preferably have the similar storage and launch characteristics as a sonobuoy so that it can be assimilated into the known handling procedures without affecting operational safety (handling, and airworthiness for fire, smoke and fumes) for the aircraft and crew.

It is also preferable that the container and its content have a bench life of greater than 5 years and require less maintenance than a sonobuoy container, since the active components in a sonobuoy are largely electronic and mechanical and they have higher levels of complexity than the rescue package arrangement.

When main parachute 18 is to be used, its function, in a predetermined manner, is to retard and stabilise the falling container since importantly different from a sonobuoy, the container may land close to a person in need of rescue and not just land in the water as is the case for a sonobuoy. Furthermore the container can have useable volume of approximately 10 litres once the required parachutes of various types are accommodated. It is thus useful to use one or more parachutes to stabilise the flight path and reduce the speed of the container, such that when it lands it preferably does not inadvertently harm any person in need of the content of the container.

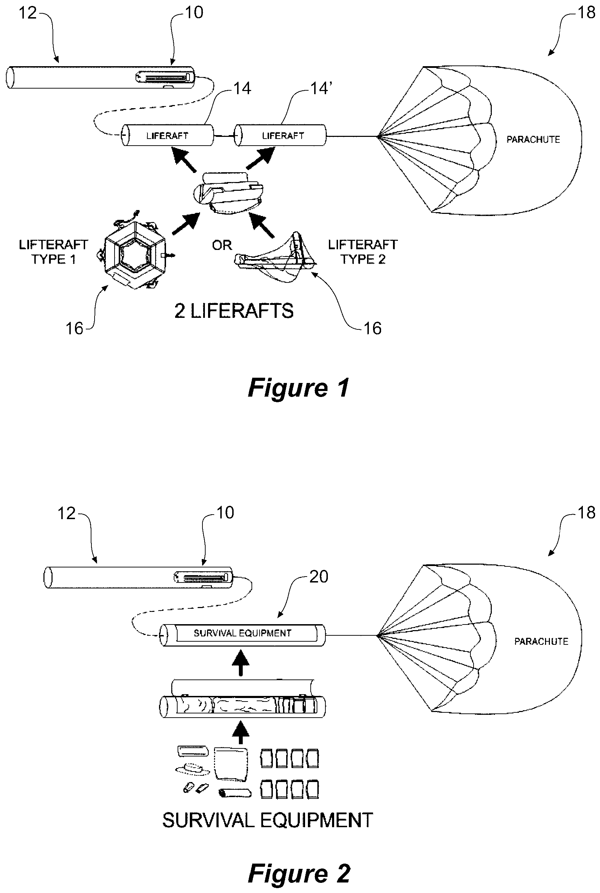

In one embodiment depicted in Figure 1 the class A container can contain a 1 or 2 person life raft, which provides flexibility when providing assistance to multiple persons in distress at different locations within a large surface area of a water body, and cost effective for such a disaster situation since two or more containers are able to be delivered to the vicinity of those many persons in distress even though they may be widely dispersed in a water body or over land.

Two Inflatable Single Person Life Rafts (ISPLR) can be stored within the available volume and when deployed from the container can be of assistance and life saving for two persons in distress with a single delivery. Figure 1 illustrates two life raft options one being a single person life raft (two life rafts can fit within a single container when they have appropriate compact size and positioning within the container) or alternatively a multi-person life raft. It will be noted that even if a person cannot gain access to the upper side of a life raft, there is provision to allow persons to hold on to the side of the life raft. An example of such a single person life raft is an ISPLR manufactured by Switlik Parachute Co., Inc. 1325 East State Street, Trenton, NJ, USA which can be manufactured to fit within the confined volume of the useable storage volume of the container and may also be modified in a way which allows the package to be vacuum packaged to further minimise the stored volume.

The container 10 is shown within a launch tube 12 (designed for holding and launching multiple life rafts). Launch tubes are a standard fit for search and rescue aircraft. Two folded life rafts 14 and 16 are depicted in part cut-away within the container 10. There is no scale to these figures, so the container 10 shown in the launch tube is not the same scale as the life raft illustrations shown immediately below.

Preferably there is consideration of the size, weight and weight distribution of the life rafts in their folded state as well as the need to ensure that the force of launch and landing does not adversely affect the step of deployment/release of the life rafts if not already deployed. The adaption of not only the shape of the folded life rafts and their positioning within the container is considered so as to ensure that the life rafts can be deployed from the landed container and inflated so as to be of immediate assistance to persons in need, who are very likely not to be capable of providing any assistance in the circumstance. Figure 1 also shows pictorially the time following launch of the rescue package via dashed lines whereby the drogue (there may be more than one drogue chute or decelerator chute) has operated first, then the main chute 18 opens. Figure 1 also depicts that during flight the life raft 14 and survival equipment 14' items can be separated from the container during the lower portion of the flight path and thus be ready for immediate deployment and/or use once the rescue package has landed.

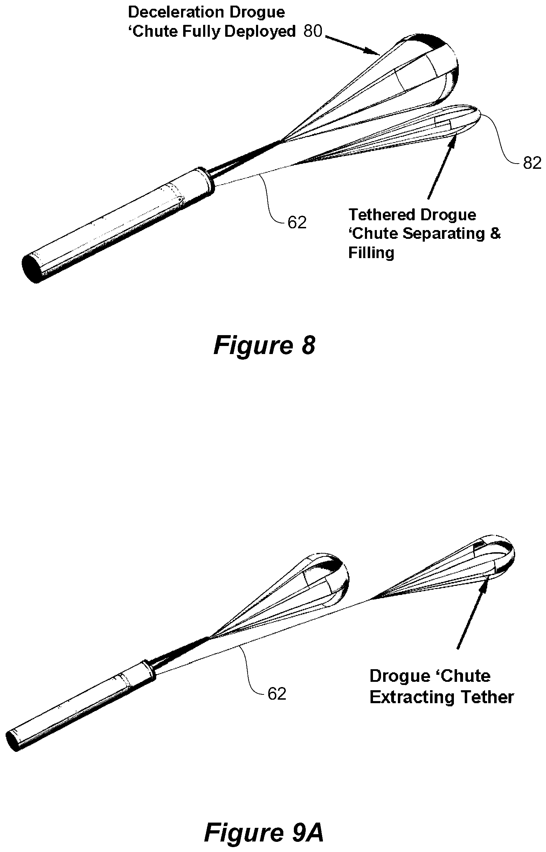

In one embodiment the operation of the decelerator chute 80 (Fig.8) is independent of the continuing storage of the two folded life rafts.

Once the container hits the water the decelerator chute 80 will be spread out across the top of the water and the container activates a release mechanism which allows the two life rafts to enter the water from their storage location within the container and to inflate themselves according to their own design requirements but not be affected by the fact that they were prior folded away in the container. The arrows merely show where the two types of life raft come from.

In one embodiment the drogue chute, decelerator chute 80, and both the life rafts, as well as the now essentially empty container are all connected to each other, in the order described.

The connection between these items can in one embodiment be provided by rope (twine or nylon), but may be of other elongate material suitable for the purpose described. The spacing of the items is in one embodiment substantially even along a total length of the connected items of about 20 metres. The length of the connection material will also add to the weight of the content of the packed container, so relatively light but strong connection material is desirable such as for example, 4 millimetre diameter rope or 2 to 3 millimetre diameter light steel cable. The connector itself may be selected to be a material that will float on the water and that would be of assistance to those in distress.

The delivery of the connected rescue package elements can be arranged so that, for example, when delivery is to the surface of a water body the connected elements can be positioned along a path where a majority of persons in need can access them.

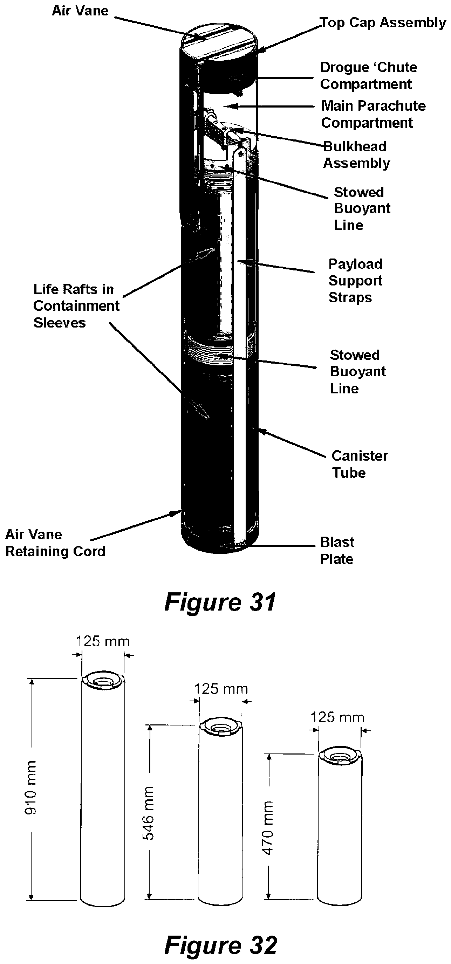

Figure 32 depicts three various container sizes (in millimetres) suitable for use with a rescue package. A class A sized container has the same size as the A class container (910 mm by 125 mm o.d.). The figure is not to scale but is illustrative of the sizes noting that the class sizing A (910mm length), B , C is largely determined by the commonly known standard.

In a further embodiment the container contains a secondary container including a flotation device, such as a MOM600, a Man Overboard and recovery Module (MOM).

In a yet further embodiment the container contains a Life Raft Unit (LRU)-16P which has been adapted to fit by being tightly folded and vacuum packed and is thus able to be fitted within at least a part of the available volume within the container. The bottom half of the life raft without the standard inflation bottle of CO2 can be located within the container, thus part of the adaption is the provision of a substitute gas cylinder of reduced diameter and increased length, and configured so as to leave room for a small survivor supply kit, including for example, potable water, space blanket, sunscreen and a chap stick.

In yet a further embodiment depicted in Figure 2 the container can contain a secondary 20 container which includes search and rescue survival aids, including: 8 x 250ml potable water containers, SARCOM handheld radio (PLB), space blanket, sunscreen, chap stick, sun hat, insect repellent, high intensity handheld light beacon, seasick tablets, water bailer, and sponge. Ideally these items are pre-packed into the secondary container, but it is possible for them to be placed into the available space of a secondary container, literally on the fly, that is, while the aircraft is on the mission. This ensures that the items delivered are relevant to the mission task. The person filling the container will appreciate that the order and relative strength of the items being packed will dictate what is packed where within the secondary container. This packing option is preferably used for a container that will be delivered to a land environment.

The container is packed according to an understanding of the required ballistic characteristics of the container, in one example; the centre of balance is located so that the flight characteristics are the same when the container deploys the various chutes, while considering the size and weight of the container. Further, the flight characteristics are more likely to be similar to those of a sonobuoy when the load exceeds about 7 kilograms weight, which ensures that the rescue package exhibits appropriate flight characteristics when the included chutes are deployed.

In an example operation a drogue chute is deployed almost immediately the rescue package is launched from the aircraft. The drogue chute is deployed after a period of about 2 seconds, when in most circumstances the rescue package is out of the boundary layer of the air about the aircraft which can vary in thickness as a function of the air density, the speed of the aircraft and the shape of the aircraft. The launch method used will result in different launch velocities through the boundary layer and then applied so that the deployment of the decelerator chute will stabilise the rescue package thereafter and thus dissuade it from tumbling and may because of the shape of the various chutes rotate the rescue package to effect a smooth decent profile as assisted by one or more other parachutes.

Following or along with the drogue chute deployment a decelerator chute is deployed, to cause the rescue package to slow down the speed and momentum of the rescue package. The use of a main parachute may then be more effective and the delay in deployment of the main chute being controllable to the benefit of the overall deployment of the rescue package by a delay mechanism. Figure 2 also depicts that a task dependent survival equipment package in the secondary container 20 can separate from the container during flight and thus be ready to be accessed once the survival packages have landed at or near the intended target.

Due to the variety of landing environments to be encountered by the rescue package, it is important that the load be chosen and stowed accordingly so that it can be accessed or will self-deploy its contents appropriately, such as life rafts when the container hits the water. For example, it is known that both ends of the container are operable to open, but operationally the end that deploys a drogue chute and or decelerator chute 80 is already open and it is the end which allows access to the stowed contents that needs to be activated to open when it lands on land or water.

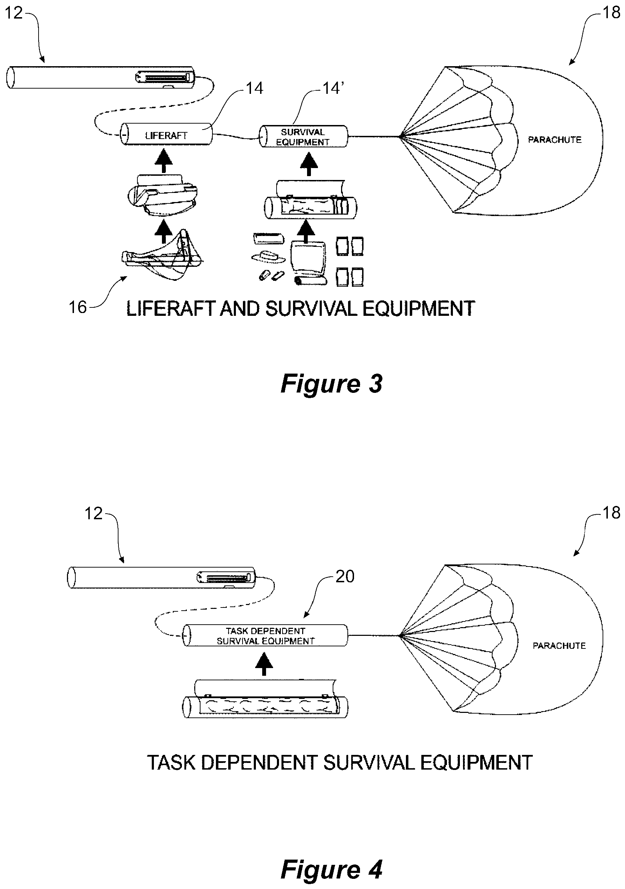

Figure 3 depicts yet another option which includes a single person life raft and a survival equipment enclosure, arranged so that they deploy from the rescue package and are then available to persons in need of them. For example the survival equipment is stored in a water proof container that is supplied with a flotation device, so that its contents can be retrieved and used when delivery is into a water body, but the same package can be delivered to a land based environment. Figure 3 also depicts that the life rafts containers 14 and 14' can separate from the container during flight and thus be ready for deployment of the life rafts 16 once the rescue package has landed.

One embodiment is to have the rescue and survival assistance items pre-packed into a secondary container 20 as depicted in Figure 4. The person filling the container will appreciate that the order and relative strength of the items being packed will dictate what is packed where within the container. This packing option is used for a container that will be delivered to a land environment or a water body if the secondary container is also fitted with a flotation device. Figure 4 also depicts that the secondary container 20 can separate from the secondary container during flight and thus the secondary container can be ready for deployment once the rescue package has landed.

In all the embodiments described thus far when the packet items and container weigh less than 7 kilograms then it may be necessary to add weight to the container, by way of example, potable water filled into a suitable container or dead weight/s located appropriately into the container so as to allow for weight distribution and redistribution during flight.

In one example, the end which provides access to the contents of the container, is arranged to be opened when the container lands, one way of doing so, is to provide a pressure plate that only activates when a predetermined g-force is experienced when the container lands on land, and when that is the case, the end of the container opens or is easily opened by the recipient, or the contents are ejected by the use of an explosive charge, a gas blast or alternatively there are electrical contacts that make a circuit when the container is in the water, and when that is the case the end of the container is opened by the release of a CO2 container which ejects a life raft and/or other contents.

In another embodiment the container has a crumple zone or zones (not depicted) located at an end of the container that are designed to reduce the deceleration of the container when it hits the water or land. The crumple zone is designed in one embodiment to reduce the internal volume of the container but in a manner and shape that is intended to lessen or avoid damage to the content of the container. The crumple zone can be formed by, in one embodiment, pre-weakening of portions of the material of the container, which is typically sheet metal of 4 to 5 millimetre thickness so that the material in the region of the weakness concertinas over a predetermined distance along the impact direction. The crumple zone may also be created by application of a coating to the container body in selected regions which acts to reinforce that portion but leave uncoated portions to have less strength relative to the reinforced regions and thus to encourage crumpling of the mixture of regions in a controlled manner. There are many further ways to create a crumple region or zone in the container of the rescue package when it is assumed that the impact forces might be between 20G and 50G.

A rescue package having a crumple zone allows for delivery to both water and land locations with greater accuracy since although there will still be use of a decelerator chute or drogue chute shortly after launch there may not be a main parachute so as to increase the accuracy of the delivery to the water or land desired location. The rescue package is then effectively a missile and as long as the flight characteristics are known then the aircraft operators can effect an accurate pre-delivery flight path, at an appropriate launch speed and altitude, taking in to consideration wind direction and speed to effect a targeted landing at higher speeds than would be desirable if there are people in the vicinity.

The order of the packaging of items into the container can have an effect of the utility of the package or packages being deployed. In one embodiment, the order is determined by the need to eject the life raft first, in another the protection of the payload requires that the compressible items are preferably isolated to survive intact the landing forces as gentle as they may be.

The proposed deployment envelope of different embodiments of the container includes deployment at an airspeed between 150 knots and 250 knots from an altitude of between 160 feet and 500 feet with a launch velocity of about 10.3 meters per second at 30° aft from an aircraft (P3 Orion, but for the P8 the launch angle will be vertical) and a maximum launch acceleration along the longitudinal axis of the container of 50 g for a container that may vary in weight between a nominal minimum of 7 kgs to a nominal maximum of 17 kgs, since those are the minimum and maximum weights of sonobuoys, and a maximum decent rate of 8.4 meters per second. These criteria are merely indicative for the embodiments to be described in this specification. There may be various standards that need to be satisfied before the container can be launched from an aircraft and those standards will be well known to those of skill in the art. The proximity of the launch vehicle to the persons needing rescue package is part of the requirement for the use of parachutes and the proposed deployment envelope.

The use of a tethered 'chute system' is the delay mechanism for this embodiment, as will be described in the following embodiments, the 'chute system" using a drogue chute will create a delay between launch of the container with the almost immediate deployment of the drogue chute and the delay until the deployment of the main parachute. It is anticipated that a 100 meter drogue chute tether between the drogue chute and the main parachute (in one embodiment the main parachute is bagged) will provide a suitable delay. The storage volume required for the drogue chute and associated drogue chute tether, and a secondary (for example stabilisation or deceleration) chute are also considerations. The deceleration chute is required since the stabilisation of the container occurs during the time the drogue chute feeds out the length of drogue chute tether.

In the embodiment to be described in this specification, the proposed deployment sequence including the working of a delay mechanism, is achieved in a way designed to deploy and land the contents of the container accurately and safely not only at the time of launch, during flight but at the time of landing.

In one embodiment the container is formed from 606-T5 aluminium with a wall thickness of 1.6 mm in a tubular shape.

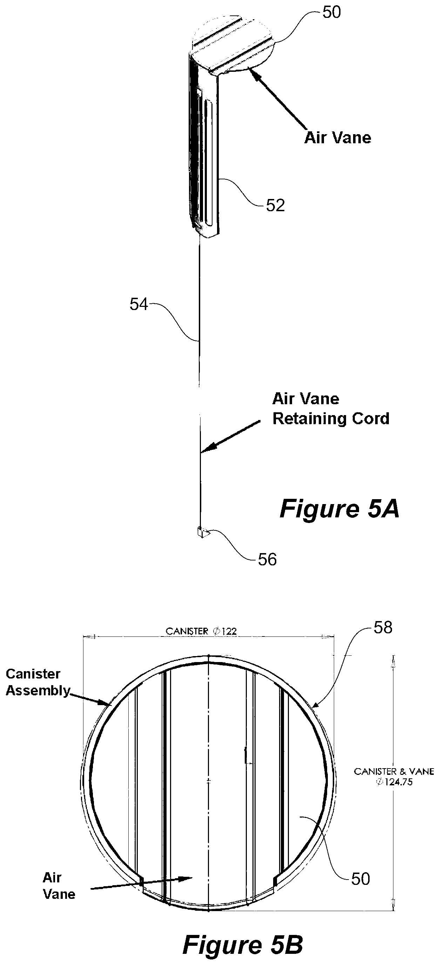

Figure 5a depicts an embodiment of the air vane arrangement which is in this embodiment a drogue chute deployment mechanism used to deploy the drogue chute as the container is launched from the launch platform. The air vane arrangement consists of an air vane cap 50 (generally disc like in shape to block off the end of the cylindrical container) which is located on an opening of the cylindrical container (nominally the top opening of the container not shown) and depending from one side of the air vane cap is a relatively long (compared to the length of the container) flap 52, in this embodiment the vane cap 50 and flap 52 are plastic material (for example, ABS) with a broad surface which conforms to the outer shape of the container. Below and attached to the flap is a retaining cord 54 which is also attached 56 to the opposite end of the container to retain the flap in positon against the outer surface of the container during storage. The flap will catch the flow of air past the container when launched from the aircraft and flip upwards and away from the container and draw with it the drogue chute (not shown). The launching of the rescue package is performed with the cap 50 end exiting first, from in this case, an A class chute, which is the same orientation as a sonobuoy in military and search and rescue when launched.

There can be alternative drogue chute deployment mechanisms, for example, an explosive release, a tether located between the container and the launch platform, an air stream actuated flap, etc. Such mechanisms are well known in the parachute field.

The air vane cap deployment from the container provides a very small delay before any of the chutes (drogue chute and decelerator chute in this embodiment) are extracted from the container thus ensuring that the container is a safe distance from the aircraft or deployment platform. Figure 5b is a top view of the air vane cap 50 fitted to the top of the container 58.

In an embodiment, the container is generally a cylindrical shape from one end to the other and consists of a bulkhead partition separating a lower payload compartment containing the payload from the parachute compartment.

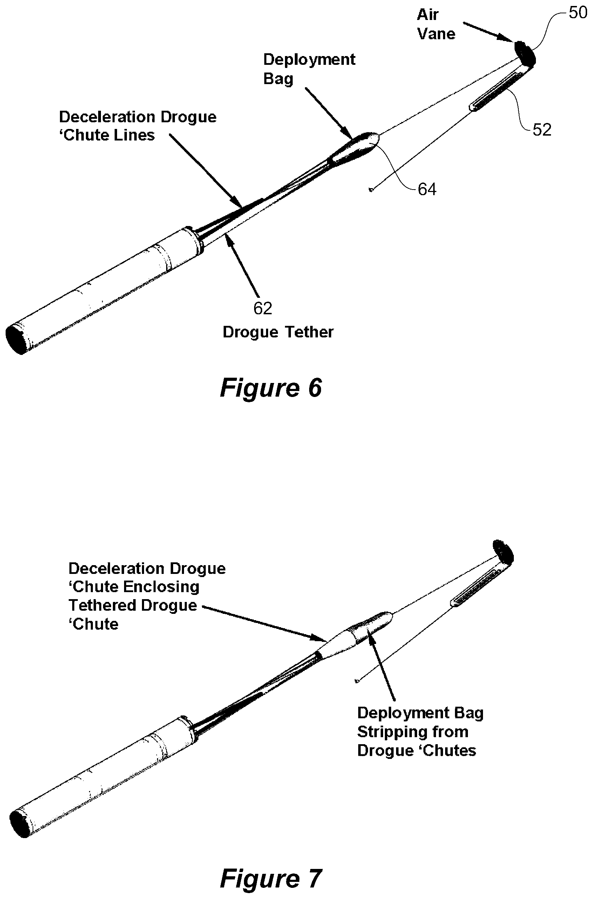

In an embodiment there is a collection of chutes (Figure 8) which are directly connected to the air vane which is thus drawn out of the parachute compartment of the container. Figure 6 depicts the air vane extracting both a drogue chute and a decelerator chute in a single deployment bag 64 so by using the term directly connected, in this embodiment, the movement associated with the air vane will directly affect a bag containing both the drogue chute, a drogue chute tether 62 and a deceleration chute. The enclosing of the tethered drogue chute inside the deceleration chute would appear to increase the chance of entanglement of the chutes, but it is better than some of the alternatives; in practice the tethered drogue chute is jettisoned clear by the inflation of the deceleration chute.

Figure 7 depicts the air vane extracting both the drogue chute and the decelerator chute with the deployment bag almost removed from the chutes.

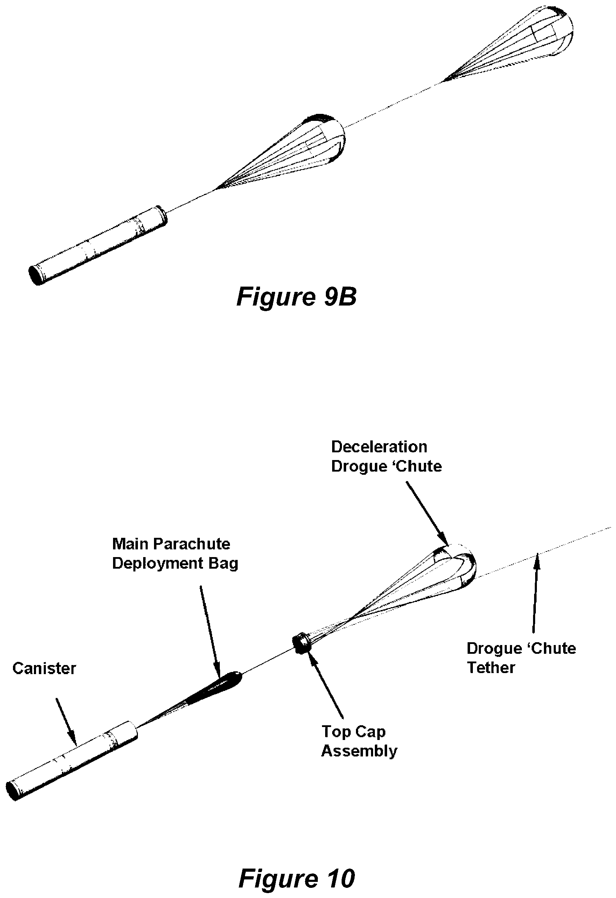

Once the bag is removed from the chutes the two chutes independently open as depicted in Figure 8, where the deceleration chute is fully deployed and the tethered drogue chute is separating and filling. Figure 9 depicts the drogue chute moving further away from the container further extracting a drogue chute tether 62 which is connected to the main parachute.

The decelerator chute can in one embodiment have a redundant attachment feature to prevent separation of the decelerator chute from the container and should deploy completely within 0.8 seconds after the container clears the launch tube at airspeed greater than 150 knots IAS.

The delay mechanism in this embodiment is the delay in fully extracting the length of drogue chute tether by the drogue chute before deployment of the main chute ensures that the main parachute is deployed well away from the aircraft or deployment platform and that the reduction in airspeed of the container allows for a smaller and lighter construction of main parachute. In an embodiment the drogue chute tether is attached to a bag containing the main parachute. The bag is deployed from the container and is removed from the main parachute as the drogue chute (and decelerator chute operates as designed) continues to separate in distance from the container and the main parachute. Indicative periods of delay are 0.48 seconds and 0.8 seconds. This period will ensure that the container is clear of the moveable platform, especially of antenna and other external elements of an aircraft.

The main chute deploys as a result of the drawing of a bag off the main parachute. Then the main parachute begins to fill with air and continues to draw out the main line connecting the main parachute to the bulkhead partition which is fixed to the container. Details of the partition (bulkhead) and the tasks it performs will be described in greater detail later in the specification. The drogue chute and decelerator chute are released from the process and fall independent of the following process.

An alternative delay mechanism embodiment comprises a former having at least a portion of the material of the drogue chute helically wound about the former and the delay mechanism exposed to the open end of the container and the time to unwind the drogue chute delays its deployment plus the playout of a drogue chute tether. A yet further alternative delay mechanism is the time it takes for the drogue chute tether to unwind from a former, located so that the drogue chute tether can be drawn out of the open end of the container. In yet a further embodiment, the end of the drogue chute tether moves a portion of an assembly mounted to a body fixed to the inner wall of the container, and only once a predetermined movement, which may be a predetermined number of rotations, is effected by the forces pulling on the drogue chute tether, will sufficient delay have occurred before the main parachute is deployed.

The main parachute chute size, as can all chutes, be sized according to known calculations involving the weight of the container, the ballistic coefficient of the container, the assumed air density, the parachute drag coefficient and then the size of the parachute can be determined. However, alternative characteristics could also be used, for example a drag coefficient of 0.9. The size of the chute being important because of the volume it would take up in the parachute compartment and its weight. In most calculations there is a desire for the characteristics of known sonobuoys to be the same or similar so that deployment and landing prediction calculations are consistent.

Figure 9B depicts the still attached deceleration chute and the drogue chute drags on full length of the drogue chute tether to initiate the deployment of the main parachute. Once the drogue chute has fully extended the length of the tether, a main parachute deployment bag containing the main parachute is pulled from the container. The delay in deploying the main parachute allows the container to be well clear of the launch platform and to have decelerated to the point that a main parachute is most effective in lowering the payload to the intended target in conformance to a descent profile.

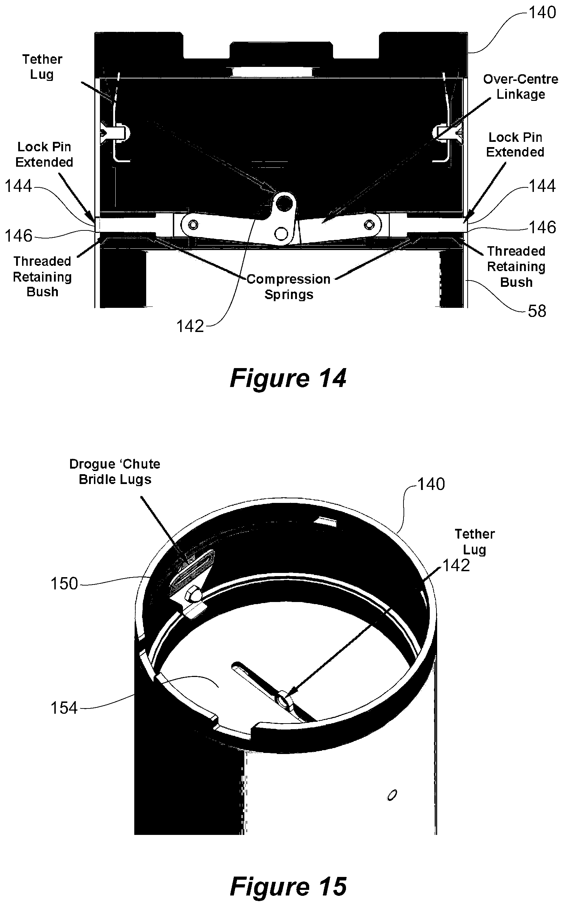

Figure 10 depicts the still attached deceleration chute and just out of the image the drogue chute drags on the drogue chute tether which is connected to the top cap 140 and catch mechanism (refer to Figure 14) which in turn is attached to the main parachute deployment bag.

The main parachute deployment bag is pulled off the main parachute by the drogue chute tether and the bag, drogue chute and decelerator chute are then free to fall separate from the rescue package.

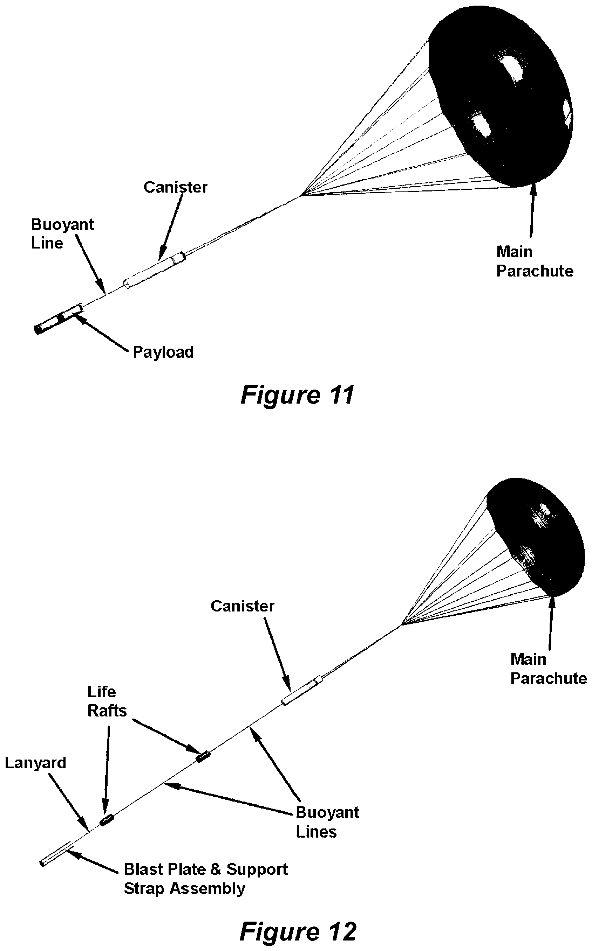

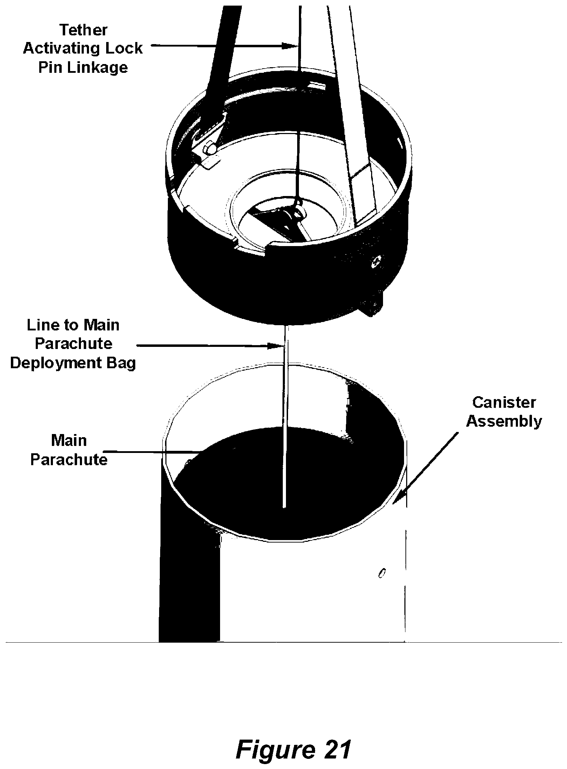

Figure 11 depicts the main parachute fully deployed and the main parachute main line initiating the release of payload from the container. As depicted in Figure 11 the main parachute has fully inflated and at one point the downward movement of the container is restrained through the main line by the deceleration provided by the main parachute. As a result of that restraint, the payload is unlatched from the bulkhead and is jettisoned out of the open end of the container, still attached to the container by a line (preferably having water buoyancy). An embodiment of an unlatching mechanism will be described in further detail later in the specification in relation to Figures 21 to 25.

Figure 12 depicts the physical separation of the payload (in this example, two folded encapsulated life rafts) but still connected by a line (also having water buoyancy) and still connected by a lanyard to the base plate and support strap assembly. The base plate and support strap assembly support the folded life rafts while in the container while releasably connected to the bulkhead. A more detailed description of this assembly will be provided later in the specification.

The life rafts are but examples of the payload and an alternative could be a secondary container or multiple secondary containers arranged in the same manner as depicted in Figure 12, i.e. joined by a line (having water buoyancy) to keep them together as the main parachute descends to the target location.

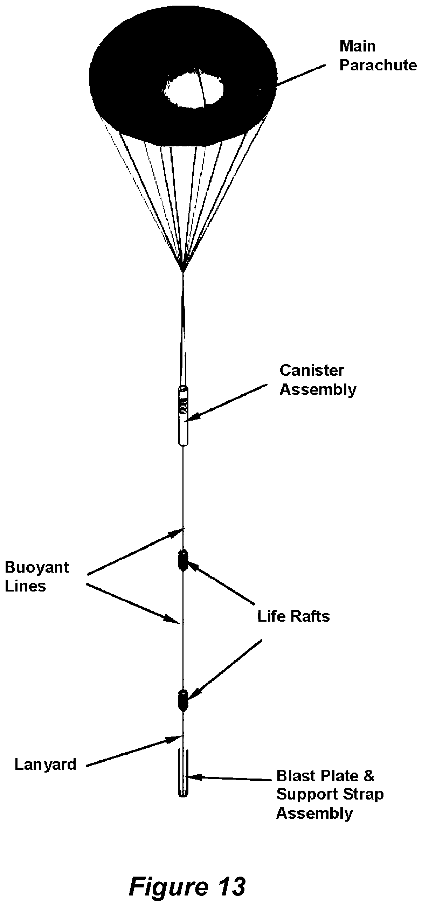

Figure 13 depicts the substantially vertical orientation of the items hanging off the main parachute as the parachute descends towards the target zone.

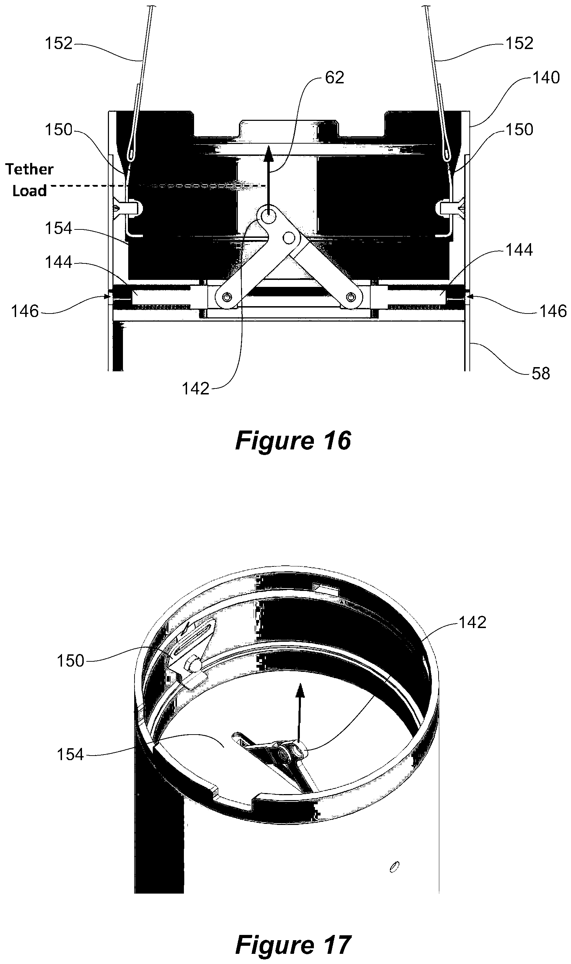

Figure 14 depicts a section of a top cap assembly 140 showing lock pins extended so as to retain the top cap in the container 58. The top cap sits below the previously described end cap 50 and within the container to not only partition the container so that the drogue chute and deceleration chute are stored separately from the main parachute but also provide a store for the drogue chute tether between the drogue chute and the container. The drogue chute tether is attached at one end to the drogue chute and at its other end to a drogue chute lug 142. The top cap is, as stated previously, retained within the container and the locking pins 144 extend in their locked state from the body of the top cap 140 into respective apertures 146 in the wall of the container 58. The locked state of the pins is maintained by over-centre linkages 148 connected to each pin and to the base of the drogue chute lug 142 and which in the over-centre position is maintained by the tension provided by compression springs 149. The bias provided by the springs is to maintain the over-centre condition, and while in that condition the engagement of the locking pins to the container. Referring back to Figure 9 and then 10 depicting the deployment of the drogue chute and eventually the full extension of the tether attached to the drogue chute. As depicted in Figure 16 the force applied by the drogue chute to the end of the drogue chute tether attached to the drogue chute lug moves the linkages from an over-centre position to an out of over-centre position which allows the compression springs to move/slide the pins out of engagement with the container, i.e. to remove the pins from their respective apertures in the container wall. The outer wall of the top cap 140 is then able to slide out of the end of the container, allowing the main parachute bag and its contents to be drawn from the container by the drogue chute.

Figure 15 depicts an isometric top view of the top cap 140 more clearly showing the tethered drogue chute lug 142 in retracted position relative to the inner base 154 of the top cap and one of the lock pins 144 in an extended position, both of which are indicative of the linkages below the lug being in the over-centre position. A bridle fitting 150 is shown located on the inside wall of the top cap (there are two bridles depicted in Figure 14 and also shown in Figure 16). Each bridle fitting is used to connect to an end of a tether (Figure 16) connected to the decelerator chute, and thus this arrangement connects the top cap and engaged container to the decelerator chute. The top cap and container are connected for as long as the drogue chute continues to draw out the drogue chute tether 62 from the container.

Figures 16 depicts a sectional view and 17 depicts an isometric view of the top cap 140, with the drogue chute lug in a raised position relative to the inner base 154 of the top cap and the lock pins in retracted position, both of which are indicative of the linkages below the lug being out of the over-centre position.

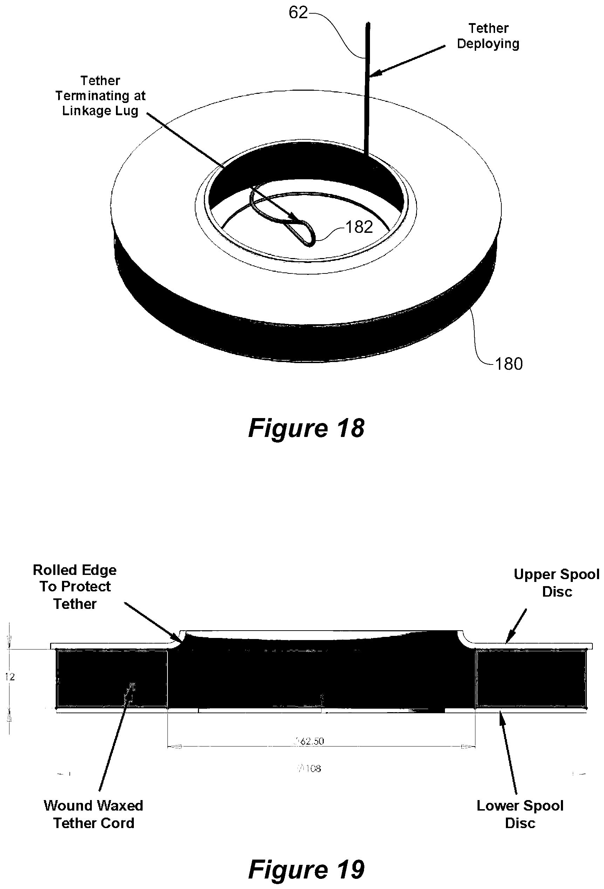

Figure 18 depicts a coiled drogue chute tether 62 in a spool casing designed to effectively allow the drogue chute tether to freely spool out as the drogue chute becomes further separated from the container. The spool of drogue chute tether is located, in use, on the inner base 154 of the top cap 140. The spool casing 180 is in this embodiment made of plastic to keep cost and weight to a minimum. One end 182 of the drogue chute tether is connected to the drogue chute lug 142 (not shown).

Figure 19 is a sectional view of the spool casing containing the spooled drogue chute tether and indicative dimensions although these are associated with this particular embodiment only. By way of example only, a 75 meter long drogue chute tether of 1mm diameter Dyneema cord of 250kgf tensile strength in a spooled/stowed configuration will have a volume of about 76,000 mm³.

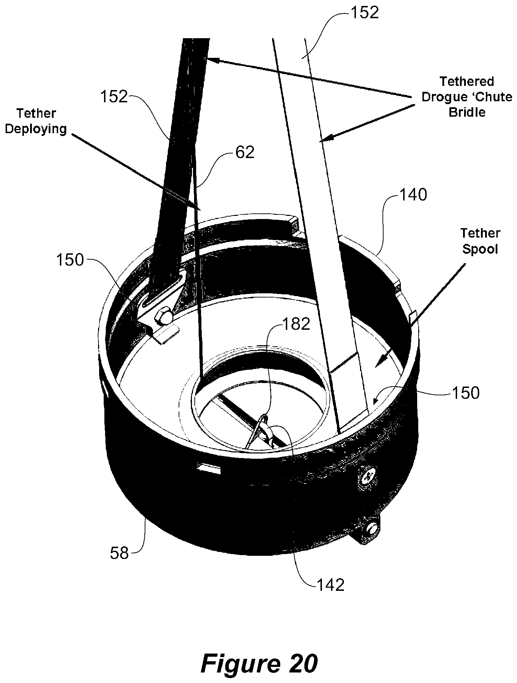

Figure 20 depicts a top isometric view of the top cap 140 showing the drogue chute lug 142 connected to an end of the drogue chute tether 62, the top of the drogue chute tether spool casing 180, the drogue chute tether unwinding and two bridles 152 connected at one end to the bridle fittings 150 and to their other ends the decelerator chute. Although the bridles look taught they may not be and it is to be noted that it is the pull provided by the drogue chute tether line that achieves the unlocking of the top cap and as shown in Figure 21 is then connected to and effects the extraction of the main parachute deployment bag.

Figure 21 depicts the top cap 140 tethered to the drogue chute after actuation of the drogue chute lug 142 which has retracted the pins 144 and allowed the top cap to exit the end of the container 58. Not shown elsewhere, and not visible in Figure 21, is the connection of one end of the main line tether to the underside of the top cap. The other end of a relatively short (compared to the drogue chute tether line) tether is connected to the main parachute deployment bag.

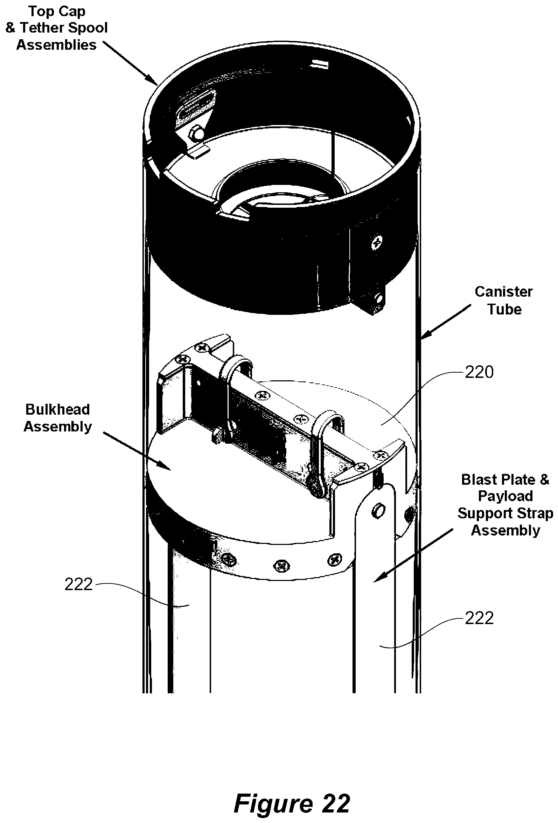

The top cap 140 when in place creates a partition between the drogue chute, deceleration chute and drogue chute tether line and the main parachute deployment bag containing the main parachute. The next partition lies between the main parachute and associated main tether line and the payload and is referred to herein as the bulkhead assembly 200 depicted in Figure 22. The bulkhead assembly 220 is releasably locked to the support straps 222 which together support the payload with the base plate (not shown), and in this embodiment the payload consists of, two folded life rafts. The bulkhead is also with the same mechanism releasably connected to the container. More detail about the release mechanism will be described later in the specification.

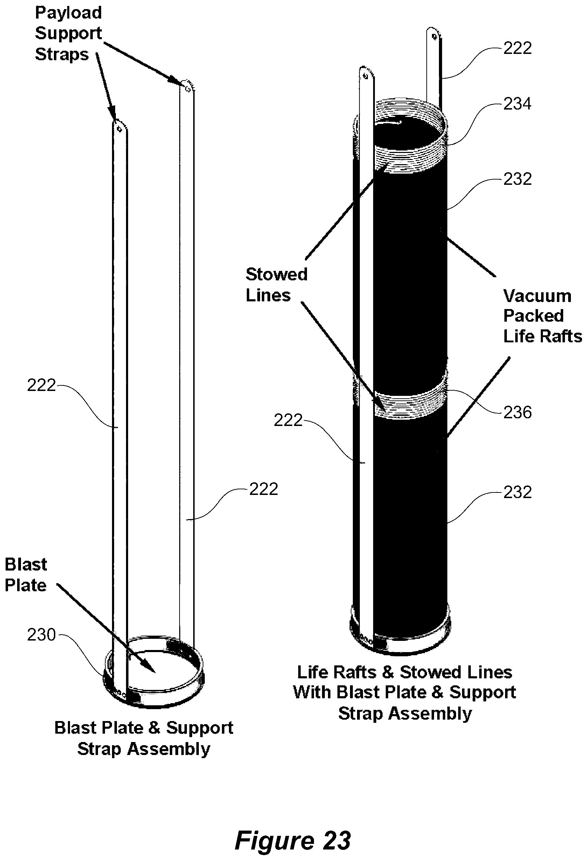

Figure 23 depicts a perspective view of an embodiment of a base plate 230 and support straps 222 supporting, in this embodiment, vacuum packed folded life rafts 232 while in the container. The free end of each payload support strap 222 has an aperture sized to accommodate a locking pin associated with the bulkhead assembly 200, details of which will be described later in the specification. In this assembly, a length of coiled line (made of buoyant material) is stored above and between the life rafts, the first of which tethers the two life rafts together, and the second line is stored and located above the upper most (with respect to the free end of the straps) life raft, which is used as a tether between the bulkhead and the upper most stored life raft.

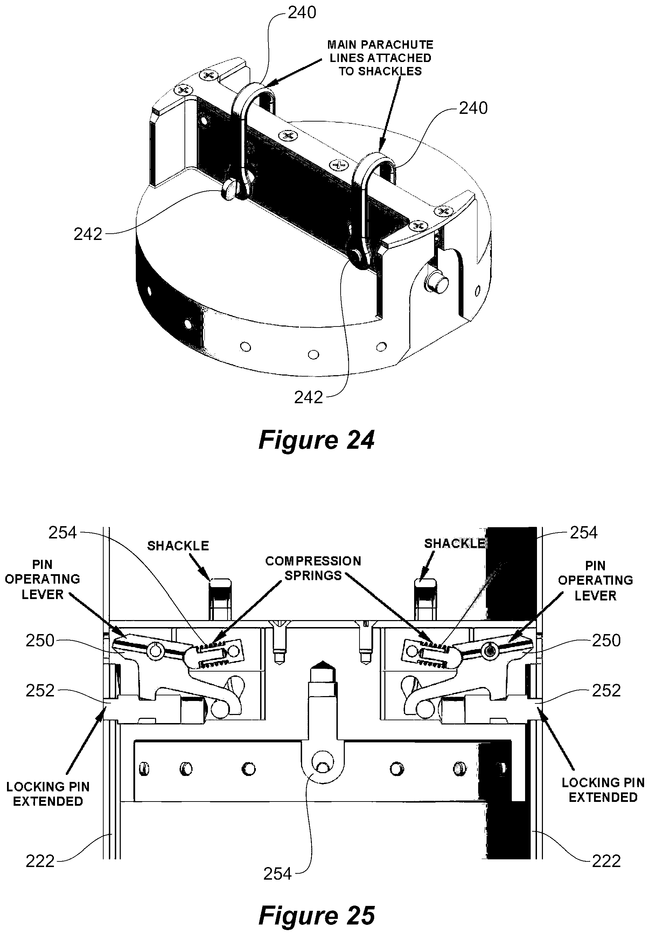

Figure 24 depicts a perspective view of the bulkhead assembly 200 showing two shackle portions 240, connectable to the main line (not shown) of the main parachute. These two shackle portions are moveable within the slot and once the main parachute has fully deployed the force of the pull of the main line will move the connector pins 242 upwards relative to the bulkhead assembly 200. The connector pins interact with a lever arrangement located within the bulkhead assembly.

It is an alternative for the payload to be extracted out of the end of the container from which the parachutes are extracted/deployed.

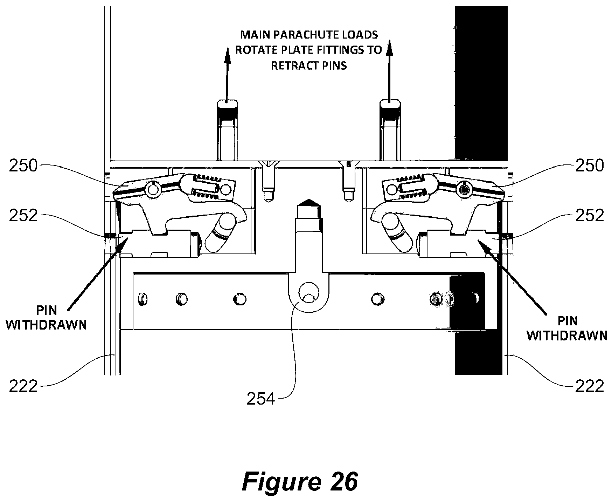

Figure 25 depicts a cross-sectional view of an embodiment of the bulkhead assembly and the movement of the connector pins 242 which extend through the bulkhead, acts on a lever arrangement 250 within the bulkhead assembly and in one state the locking pins are extended into the payload support straps 222. When the lever arrangement 250 in the bulkhead is in the other state, the locking pins 242 are moved out of respective apertures in the payload support straps 222 as depicted in Figure 26. The result of the removal of the locking pins is to allow the payload straps and base plate 230 and accompanying payload, in this case, two life rafts and associated tethers to drop/move with the momentum of their descent, out of the container 58 which is tethered to the main parachute which is slowing down relative to the payload. Figure 25 also depicts an embodiment of the lever arrangement which in this embodiment is based on an over-centre lever configuration, which is biased by compression springs 254 into either of two states, the action during each state is to either; extend the locking pin 252 into an aperture in the strap 222; or to extract the locking pin 252 from the aperture in the strap 222. As described previously the change of position of the locking pin from extended to retracted; relative to the aperture in the strap, is initiated by the movement of the connector pins 242.

The bulkhead 220 is connected to the container 58 using screws in the various screw receiving apertures radially distributed about the periphery of the bulkhead. With the bulkhead firmly attached to the container, tether attachment lug is connected to the line 234 the other end of which is connected to the first of the life rafts 232. Thus when the payload leaves the container it is still attached to it by the line 234, as is the second of the life rafts 232 by the interconnecting line 234. A lanyard (not shown) is connected between the second of the life rafts and the payload support strap or straps 222 and connected base plate 230.

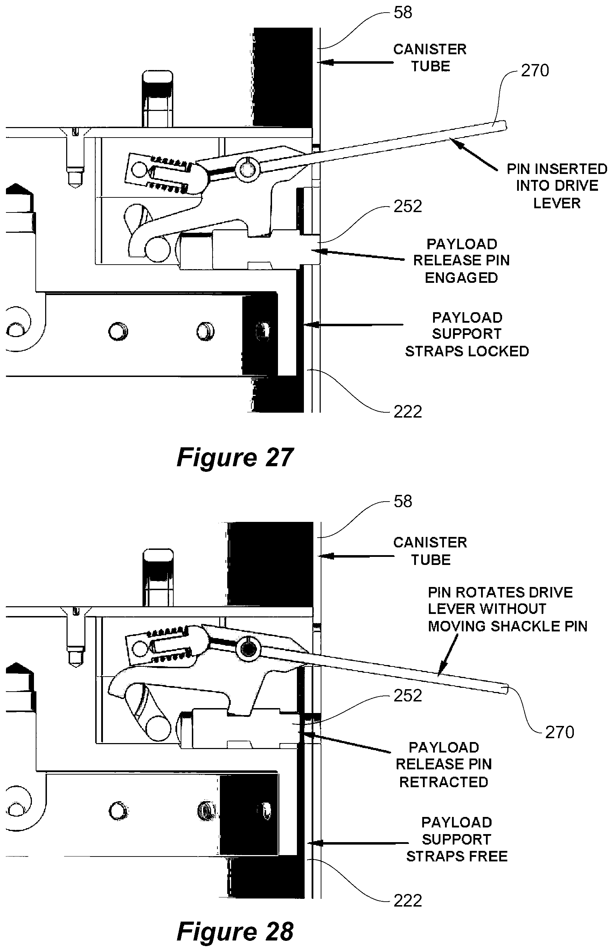

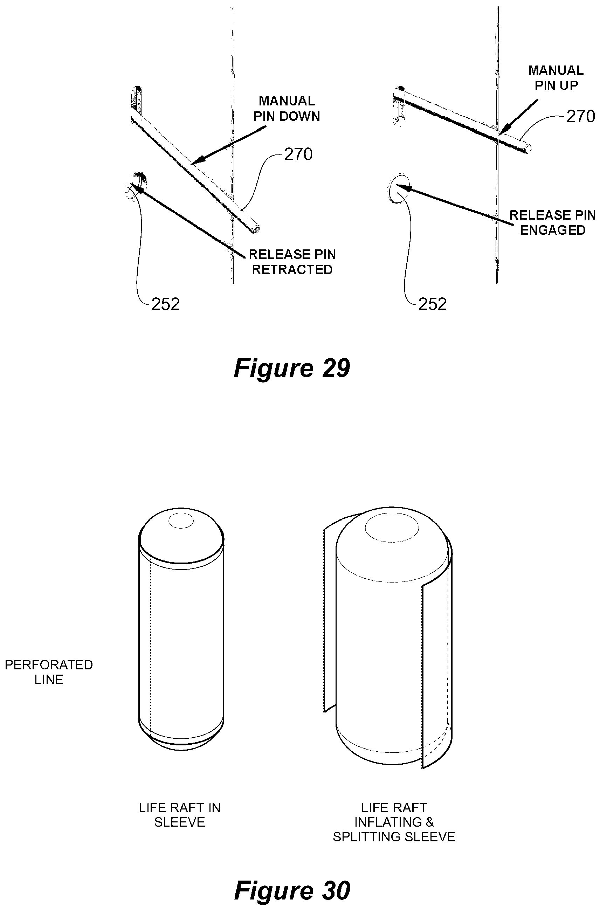

So as to allow the payload to be manually attached and disengaged to the bulkhead, the locking pins 252 are operable manually as depicted in Figures 27 and 28 since the movement of the shackle will only result in the locking pins being retracted if they were previously in the inserted state. A manually operable pin 270 is inserted into the lever arrangement to change the state of the over-centre arrangement and thus the retraction and insertion of the locking pins 252. As depicted in Figure 27 when the inserted pin is raised while inserted the locking pin is in place the locking pins are in the inserted state, and as depicted in Figure 28 when the inserted pin is in the lowered position relative to the raised position then the locking pins are in the retracted state. While the locking pins are in the retracted state the straps 222 can be removed or inserted as the case may be to remove or insert the payload into the container. Figure 29 depicts the external view of the bulkhead and the relative positions of the locking pins 252 in relation to the raised or lowered position of the manually operable pin 270. This manual operation allows different payloads to be placed within the container and for connection of a line to the tether attachment lug if required.

Figure 30 depicts one embodiment where each life raft is encased in a frangible sleeve and in another arrangement each life raft is encased in an air evacuated plastics enclosure to reduce the volume in its stored state. The life rafts are arranged to self-inflate in certain conditions and thus the encasements are arranged by design or modification to breach (be frangible) and thus the life rafts will deploy into their useable state without damage or unnecessary delay.

Figure 31 depicts a view of the interior elements of an embodiment of a rescue package, having an air vane cap 50, flap 52 and retaining cord arrangement; a top cap assembly used to form a barrier between the drogue chute and deceleration chute located in the nominal top of the container 58 and an associated drogue chute tether which plays out to its full length when the drogue chute is furthest from the top cap and container thus unlocking the top cap from the container freeing it to slide out of the top of the container and the play out period of the drogue chute tether, providing a delay, before deployment of the main parachute along with the ejection of the top cap; in this embodiment a main parachute bag encloses the main parachute which unfolds and begins to decrease the rate of descent; the main parachute being connected to a bulkhead assembly by a main chute line which when it becomes fully extended actuates the release of the payload from engagement with the bulkhead; and the momentum of the payload, in this embodiment, two life rafts tethered together to be suspended from the main parachute and the payload support straps and base plate as they fall almost vertically to the target on sea or land.

Thus based on the embodiment described herein the method of deployment of a rescue package from a moving platform includes deploying a drogue chute from the container wherein the deployment occurs only after the rescue package clears the moving platform. There may also be a further chute deployed from the container, such as for example a decelerator chute, which may deploy at the same time or later than the drogue chute. The next step is separating the drogue chute from the container after a time delay dependant on the distance separation of the drogue chute from the rescue package. Following the separation the main parachute is able to deploy from the container. The deployment of the payload from the container is caused by the main parachute retarding the descent of then remaining container and payload to such an extent as to mechanically unlock the payload freeing it from the container wherein the main parachute, container and payload are tethered together.

Based upon initial estimates and existing operational scenarios, the rescue package arrangement offers the following potential benefits:

Greater flexibility compared with the ASRK alone as multiple rescue package arrangements have the potential to be provided to more people especially in geographically spread rescue tasks.

Great flexibility in terms of being able to be used in types of aircraft supporting "A" Class containers (typically military and specialised search and rescue aircraft) which are air deliverable and that any aircraft carrying such containers can be redirected to be involved in a fast response Search And Rescue (SAR) task.

Ability for all flights to be instantly re-assigned to a SAR task by having preinstalled and pre-filled rescue package arrangements as a standard fit lessens response times in disaster and emergency situations and that can translate directly into more lives saved.

Provides the opportunity to add capability to those aircraft that may already be capable of carrying and deploying ASRKs that also have a conventional sonobuoy deployment capability.

Cost effective for small number of survivors (current estimated cost being US$3,000 per apparatus as opposed to US$50,000 per ASRK which would be deployed for a single person rescue) and one of each type of the apparatus can be carried on every applicable aircraft as 'standard fit" to enable in-flight flexibility to be reassigned and respond so as to deliver appropriate rescue equipment and supplies over water or land.

Up to 124 of the apparatus can be fitted to a dedicated SAR mission aircraft for multiple rescues depending on the aircraft.

Maintenance efficiency in the anticipated reduced number of controlled launch jettison checks on applicable aircraft (as are required for ASRK use on the same aircraft).

Safety for aircrew by reduced exposure to door opening in flight risks associated with delivery of Heli-Boxes and other non-standard size and shape containers.

## Claims

1. A rescue package arrangement for launching from a moving platform having a launch tube (12), comprising:
a container (10) body externally sized and shaped to be launched from a moving platform using a launch tube (12);
a main parachute located within the container (10);
a drogue chute within the container (10) deployed after deployment of the container from the moving platform and the drogue chute connected to the main parachute by a drogue chute tether (62);
a decelerator chute (18) connected to the container (10) and located within the container and arranged to deploy with or after the drogue chute is deployed; and
a delay mechanism arranged to delay deployment of the main parachute for a period of time after the drogue chute deployed from the container (10);
wherein the container (10) is adapted to contain a payload including at least one of the group of items: inflatable life raft (16, 232), potable water, long-life food, matches, handheld light sources, handheld beacons, handheld communication devices, cell batteries, rope, water proof sheet material, blankets, sunscreen, hats, insect repellent, containers, utensils, sea-sickness tablets, water bailer, sponges, and wherein the decelerator chute (18) assists the stabilisation of the container (10) during at least a portion of the flight of the container (10).

2. The rescue package according to claim 1 wherein the delay mechanism comprises
a winding of the drogue chute tether (62) located within the container (10) and adapted to play out, as the drogue chute and the container (10) separate in distance, and the delay period being determined by the length of the drogue chute tether (62) the end of which is connected to a main parachute.

3. The rescue package according to claim 2 further comprising
a drogue chute deployment mechanism having an air resistance element located external to the container (10) connected to the drogue chute that initiates the deployment of the drogue chute once the container (10) is launched from the launch tube (12).

4. The rescue package according to claim 1 further including:
a partition (200) located between the main parachute and the payload, the partition (200) adapted to release the payload from containment in the container (10) when the main parachute is spaced from the bulkhead (200) by a the full length of a length of main chute tether.

5. The rescue package according to claim 4 wherein the partition (200) includes:
at least one movable attachment element attached to one end of a tether which is attached to the main parachute, movable with respect to the partition (200), when the main parachute is spaced from the bulkhead (200) by a the full length of a length of tether, and
a latch moveable by the moveable attachment element to unlatch and release the payload from containment in the container (10).

6. The rescue package according to claims 4 and 5 where in the latch is manually moveable to latch the payload to the container (10).

7. The rescue package according to any preceding claims wherein the rescue package further includes:
a line connection between the main parachute and at least one item of the group of items, and the container (10).

8. The rescue package according to claim 7 wherein the order of connection is main parachute, the container (10) and at least one item.

9. The rescue package according to claim 1 wherein the minimum weight of the rescue package is 7 kilograms.

10. The rescue package according to claim 1 wherein the maximum weight of the rescue package is 17.7 kilograms.

11. The rescue package according to any preceding claim wherein the container (10) is one of sizes A, B, C, D, E, F, or G of the military standard containers being suitable for launch from a launch tube sized to accommodate the passage of the container (10).

12. The rescue package according to claim 1 further including:
a secondary container (20) sized for fitment within the container (10) wherein the secondary container (20) is adapted to contain at least one of the group of items.

13. A method of deployment of a rescue package from a moving platform, the rescue package including, a container (10), a drogue chute, a main parachute, and a payload wherein the main parachute and payload are tethered, the steps of the method including:
deploying a drogue chute from the container (10);
deploying a decelerator chute (18) from the container (10);
deploying a main chute from the container (10) after a time delay dependant on the distance separation of the drogue chute from the rescue package;
causing the deployment of the payload from the container (10) using the main parachute, wherein the main parachute, container (10) and payload are tethered together.

## Patentansprüche

1. Rettungspaketanordnung zum Abschießen aus einer sich bewegenden Plattform, die ein Abschussrohr (12) aufweist, Folgendes umfassend:
einen Behälter (10) körper, der äußerlich bemessen und geformt ist, um aus einer sich bewegenden Plattform unter Verwendung eines Abschussrohrs (12) abgeschossen zu werden;
einen Hauptfallschirm, der sich innerhalb des Behälters (10) befindet;
einen Bremsschirm innerhalb des Behälters (10), der nach einer Öffnung des Behälters aus der sich bewegenden Plattform geöffnet wird, und wobei der Bremsschirm mit dem Hauptfallschirm durch eine Bremsschirmleine (62) verbunden ist;
einen Entschleunigungsschirm (18) der mit dem Behälter (10) verbunden ist und sich innerhalb des Behälters befindet und angeordnet ist, um sich während oder nachdem der Bremsschirm geöffnet wird zu öffnen; und
einen Verzögerungsmechanismus, der angeordnet ist, um die Öffnung des Hauptfallschirms für eine Zeitdauer nachdem der Bremsschirm aus dem Behälter (10) geöffnet wird, zu verzögern;
wobei der Behälter (10) angepasst ist, um eine Nutzlast zu enthalten, die wenigstens eines aus der folgenden Gruppe von Gegenständen einschließt:
aufblasbare Rettungsinsel (16, 232), Trinkwasser, haltbare Lebensmittel, Streichhölzer, tragbare Lichtquellen, tragbare Leuchtfeuer, tragbare Kommunikationsvorrichtungen, Zellenbatterien, Seil, wasserdichtes Folienmaterial, Decken, Sonnenschutzmittel, Hüte, Insektenschutzmittel, Behälter, Besteck, Seekrankheitstabletten, Wasserschöpfeimer, Schwämme, und wobei der Entschleunigungsschirm (18) die Stabilisierung des Behälters (10) während wenigstens eines Abschnitts des Fluges des Behälters (10) unterstützt.

2. Rettungspaket nach Anspruch 1, wobei der Verzögerungsmechanismus ein Aufwickeln der Bremsschirmleine (62) umfasst, die sich innerhalb des Behälters (10) befindet und angepasst ist, um sich umzusetzen, während der Bremsschirm und der Behälter (10) sich in einer Entfernung trennen, und wobei die Verzögerungsdauer durch die Länge der Bremsschirmleine (62) bestimmt wird, deren Ende mit einem Hauptfallschirm verbunden ist.

3. Rettungspaket nach Anspruch 2, ferner umfassend einen Bremsschirmöffnungsmechanismus mit einem Luftwiderstandselement, der sich außerhalb des Behälters (10) befindet, der mit dem Bremsschirm verbunden ist, der die Öffnung des Bremsschirms einleitet, sobald der Behälter (10) aus dem Abschussrohr (12) abgeschossen wird.

4. Rettungspaket nach Anspruch 1, ferner Folgendes einschließend:
eine Trennwand (200), die sich zwischen dem Hauptfallschirm und der Nutzlast befindet, wobei die Trennwand (200) angepasst ist, um die Nutzlast aus einer Kapselung in dem Behälter (10) zu lösen, wenn der Hauptfallschirm von dem Schott (200) um eine die volle Länge einer Länge der Hauptfallschirmleine beabstandet ist.

5. Rettungspaket nach Anspruch 4, wobei die Trennwand (200) Folgendes einschließt:
wenigstens ein bewegliches Befestigungselement, das an einem Ende einer Leine befestigt ist, die an dem Hauptfallschirm befestigt ist, das in Bezug auf die Trennwand (200) beweglich ist, wenn der Hauptfallschirm von dem Schott (200) um eine die volle Länge einer Länge der Leine beabstandet ist, und
einen Riegel, der durch das bewegliche Befestigungselement beweglich ist, um sich zu entriegeln und die Nutzlast aus der Kapselung in dem Behälter (10) zu lösen.

6. Rettungspaket nach den Ansprüchen 4 und 5, wobei der Riegel manuell beweglich ist, um die Nutzlast mit dem Behälter (10) zu verriegeln.

7. Rettungspaket nach einem der vorhergehenden Ansprüche, wobei das Rettungspaket ferner Folgendes einschließt:
eine Leitungsverbindung zwischen dem Hauptfallschirm und wenigstens einem Gegenstand der Gruppe von Gegenständen und dem Behälter (10).

8. Rettungspaket nach Anspruch 7, wobei die Reihenfolge der Verbindung Folgende ist: Hauptfallschirm, der Behälter (10) und wenigstens ein Gegenstand.

9. Rettungspaket nach Anspruch 1, wobei das Mindestgewicht des Rettungspakets 7 Kilogramm beträgt.

10. Rettungspaket nach Anspruch 1, wobei das Maximalgewicht des Rettungspakets 17,7 Kilogramm beträgt.

11. Rettungspaket nach einem der vorhergehenden Ansprüche, wobei der Behälter (10) eine der Größen A, B, C, D, E, F oder G der Militärstandardbehälter ist, die für einen Abschuss aus einem Abschussrohr geeignet sind, das bemessen ist, um den Durchgang des Behälters (10) aufzunehmen.

12. Rettungspaket nach Anspruch 1, ferner Folgendes einschließend:
einen Sekundärbehälter (20), der für einen Verbau innerhalb des Behälters (10) bemessen ist, wobei der Sekundärbehälter (20) angepasst ist, um wenigstens eines aus der Gruppe aus Gegenständen zu enthalten.

13. Verfahren zum Öffnen eines Rettungspakets aus einer sich bewegenden Plattform, wobei das Rettungspaket einen Behälter (10), einen Bremsschirm, einen Hauptfallschirm und eine Nutzlast einschließt, wobei der Hauptfallschirm und die Nutzlast angebunden sind, wobei die Schritte des Verfahrens Folgendes einschließen:
Öffnen eines Bremsschirms aus dem Behälter (10);
Öffnen eines Entschleunigungsschirms (18) aus dem Behälter (10);
Öffnen eines Hauptfallschirms aus dem Behälter (10) nach einer Zeitverzögerung, abhängig von der Entfernungstrennung des Bremsschirms von dem Rettungspaket;
Bewirken der Öffnung der Nutzlast aus dem Behälter (10) unter Verwendung des Hauptfallschirm, wobei der Hauptfallschirm, der Behälter (10) und die Nutzlast aneinander angebunden sind.

## Revendications

1. Agencement de kit de secours conçu pour être lancé depuis une plateforme mobile comportant un tube de lancement (12), comprenant :
un corps de contenant (10) dont les dimensions et la forme extérieures permettent le lancement depuis une plateforme mobile au moyen d'un tube de lancement (12) ;
un parachute principal situé à l'intérieur du contenant (10) ;
un parachute de freinage à l'intérieur du contenant (10), déployé suite au déploiement du contenant depuis la plateforme mobile, le parachute de freinage étant relié au parachute principal par une attache de parachute de freinage (62) ;
un parachute de décélération (18) relié au contenant (10) et situé à l'intérieur du contenant et agencé pour se déployer simultanément ou suite au déploiement du parachute de freinage ; et
un mécanisme de retardement agencé pour retarder le déploiement du parachute principal pendant un certain temps après le déploiement du parachute de freinage depuis le contenant (10) ;
dans lequel le contenant (10) est conçu pour contenir une charge utile comprenant au moins un article parmi le groupe d'articles comprenant :
un radeau de secours gonflable (16, 232), de l'eau potable, de la nourriture de longue conservation, des allumettes, des sources de lumière portatives, des balises portatives, des dispositifs de communication portatifs, des piles électriques, une corde, un matériau de bâche imperméable, des couvertures, de l'écran solaire, des chapeaux, de l'insectifuge, des contenants, des ustensiles, des comprimés contre le mal de mer, une écope, des éponges, et dans lequel le parachute de décélération (18) contribue à stabiliser le contenant (10) pendant au moins une partie du vol du contenant (10).

2. Kit de secours selon la revendication 1, dans lequel le mécanisme de retardement comprend un enroulement de l'attache (62) du parachute de freinage situé dans le contenant (10) et conçu pour se dérouler à mesure que le parachute de freinage et le contenant (10) s'éloignent l'un de l'autre, et la période de retardement étant déterminée par la longueur de l'attache du parachute de freinage (62) dont l'extrémité est reliée à un parachute principal.

3. Kit de secours selon la revendication 2, comprenant en outre un mécanisme de déploiement du parachute de freinage comportant un élément de résistance à l'air situé à l'extérieur du contenant (10) relié au parachute de freinage qui déclenche le déploiement du parachute de freinage une fois que le contenant (10) est lancé depuis le tube de lancement (12).

4. Kit de secours selon la revendication 1, comprenant en outre :
une cloison (200) située entre le parachute principal et la charge utile, la cloison (200) étant conçue pour larguer la charge utile contenue dans le contenant (10) lorsque le parachute principal est espacé de la cloison (200) à raison d'une longueur entière d'une attache de parachute principal.

5. Kit de secours selon la revendication 4, dans lequel la cloison (200) comprend :
au moins un élément mobile de fixation fixé à une extrémité d'une attache qui est fixée au parachute principal, mobile par rapport à la cloison (200), lorsque le parachute principal est espacé de la cloison (200) à raison d'une longueur entière d'une attache de parachute principal, et
un verrou mobile par l'élément mobile de fixation pour déverrouiller et larguer la charge utile contenue dans le contenant (10).

6. Kit de secours selon les revendications 4 et 5, dans lequel le verrou est mobile manuellement pour verrouiller l'arrimage de la charge utile au contenant (10).

7. Kit de secours selon l'une quelconque des revendications précédentes, dans lequel le kit de secours comprend en outre :
une liaison par suspente entre le parachute principal et au moins un article du groupe d'articles, et le contenant (10).

8. Kit de secours selon la revendication 7, dans lequel l'ordre de liaison est : parachute principal, contenant (10), et au moins un article.

9. Kit de secours selon la revendication 1, dans lequel le poids minimal du kit de secours est 7 kilogrammes.

10. Kit de secours selon la revendication 1, dans lequel le poids maximal du kit de secours est 17,7 kilogrammes.

11. Kit de secours selon l'une quelconque des revendications précédentes, dans lequel le contenant (10) possède l'un des formats A, B, C, D, E, F ou G des contenants militaires standards convenant au lancement depuis un tube de lancement dimensionné de façon à permettre le passage du contenant (10).

12. Kit de secours selon la revendication 1, comprenant en outre :
un contenant secondaire (20) dimensionné de façon à pouvoir être ajusté dans le contenant (10), le contenant secondaire (20) étant conçu pour contenir au moins un élément du groupe d'articles.

13. Procédé de déploiement d'un kit de secours depuis une plateforme mobile, le kit de secours comprenant un contenant (10), un parachute de freinage, un parachute principal et une charge utile, le parachute principal et la charge utile étant attachés, et le procédé comportant les étapes consistant à :
déployer un parachute de freinage depuis le contenant (10) ;
déployer un parachute de décélération (18) depuis le contenant (10) ;
déployer un parachute principal depuis le contenant (10) après un délai dépendant de la distance de séparation entre le parachute de freinage et le kit de secours ;
amorcer le déploiement de la charge utile depuis le contenant (10) au moyen du parachute principal, le parachute principal, le contenant (10) et la charge utile étant attachés ensemble.
